# FASCICULE DE BREVET EUROPEEN

(11) **EP 2 833 772 B1**
(45) Date de publication et mention de la délivrance du brevet: **04.11.2015**
(21) Numéro de dépôt: 13719969.1
(22) Date de dépôt: 02.04.2013
(51) Int. Cl.: A47J 45/07

(54) **ARTICLE CULINAIRE MUNI D'UNE ANSE ET D'UNE POIGNEE AMOVIBLE**
KOCHARTIKEL MIT EINEM SCHAFT UND ABNEHMBAREM GRIFF
CULINARY ARTICLE PROVIDED WITH A SHANK AND A REMOVABLE HANDLE

(30) Priorité: 04.04.2012 FR 1253068
(43) Date de publication de la demande: 11.02.2015
(73) Titulaire: SEB S.A., 69130 Ecully (FR)
(72) Inventeur: MONTGELARD, Michel, F-73100 Aix Les Bains (FR)
(74) Mandataire: Bourrières, Patrice
(86) Numéro de dépôt international: PCT/FR2013/050727
(87) Numéro de publication internationale: WO 2013/150237

(56) Documents cités:
- US-A- 1 268 089
- US-A1- 2008 006 645

## Description

La présente invention se rapporte au domaine technique général des articles culinaires comprenant au moins une anse s'étendant vers l'extérieur et comportant une poignée amovible.

Il est connu, du brevet US1268089, un article culinaire comprenant une anse s'étendant vers l'extérieur dans un plan sensiblement horizontal et dans laquelle est ménagée une ouverture. L'article culinaire comporte une poignée amovible s'étendant selon un axe longitudinal et comprend à une extrémité un bec susceptible d'être introduit dans l'ouverture pour assembler la poignée sur l'anse par pivotement. La poignée comprend un dispositif de verrouillage comportant un verrou mobile entre une première position d'accouplement de la poignée sur l'anse, dans laquelle le verrou est agencé sous l'anse et une deuxième position de désaccouplement dans laquelle le verrou est à coté de l'anse. Le dispositif de verrouillage comporte un bouton de manoeuvre du verrou, agencé sur le corps de préhension.

Une telle poignée présente l'avantage de permettre de désaccoupler facilement la poignée de l'article culinaire lorsque celui-ci est chauffé évitant ainsi de chauffer la poignée.

Cependant, un jeu mécanique conséquent est nécessaire entre le bec et l'ouverture pour permettre une introduction facile de la poignée. Ainsi un tel dispositif de préhension présente l'inconvénient de ne pas permettre une parfaite immobilisation de la poignée, notamment selon l'axe longitudinal de la poignée mais également suivant un axe horizontal transversal à l'axe longitudinal de la poignée.

Le but de la présente invention est de remédier aux inconvénients précités et de proposer un article culinaire présentant une ergonomie optimisée pour permettre à l'utilisateur de le manipuler facilement, en toute sécurité.

Un autre but de l'invention est de proposer un article culinaire comportant une poignée amovible qui soit de conception simple et économique à mettre en oeuvre.

Un autre but de l'invention est de proposer un article culinaire qui puisse être rangé facilement.

Ces buts sont atteints avec un article culinaire comprenant au moins une anse s'étendant vers l'extérieur dans un plan sensiblement horizontal et dans laquelle est ménagée une ouverture, l'article culinaire comportant une poignée amovible s'étendant selon un axe longitudinal et comportant à une extrémité un bec susceptible d'être introduit dans l'ouverture pour assembler la poignée sur l'anse par pivotement, le bec comportant une première surface d'appui coopérant avec une paroi interne de l'ouverture pour immobiliser la poignée sur l'anse selon l'axe longitudinal lorsque la poignée est assemblée sur l'anse et le bec comportant une deuxième surface d'appui qui coopère avec l'anse pour générer sur le bec un effort suivant l'axe longitudinal proportionnel au couple exercé par le poids de l'article culinaire, ledit effort permettant de plaquer la première surface d'appui contre la paroi interne de l'ouverture.

La mise en pression de la première surface d'appui contre une paroi interne de l'ouverture de l'anse à l'aide de l'effort induit par la deuxième surface d'appui permet de supprimer le jeu selon l'axe longitudinal de la poignée agencée sur l'anse.

De plus, l'effort selon l'axe longitudinal généré par la deuxième surface d'appui, permettant de plaquer la première surface d'appui contre la paroi interne de l'ouverture est proportionnel au poids de l'article culinaire. Ainsi, plus l'article culinaire contient d'aliments, plus l'effort de maintien est important.

L'absence de jeu selon l'axe longitudinal entre l'anse et la poignée lors des manipulations de l'article culinaire permet d'améliorer l'ergonomie et la qualité perçue par l'utilisateur.

Avantageusement, la première surface d'appui comporte une première partie non parallèle et non perpendiculaire à l'axe longitudinal, la première partie coopérant avec la paroi interne de l'ouverture, de forme complémentaire à la forme de la première partie, pour immobiliser la poignée sur l'anse dans une direction transversale à l'axe longitudinal, incluse dans le plan horizontal lorsque la poignée est assemblée sur l'anse.

Cette disposition permet de supprimer les jeux transversaux à l'axe longitudinal de la poignée agencée sur l'anse. En effet, la première partie de la première surface d'appui, non parallèle et non perpendiculaire à l'axe longitudinal, s'emboite et vient en appui contre la paroi interne de l'ouverture, la paroi interne de l'ouverture ayant une forme complémentaire à la forme de la surface d'appui.

Ainsi, l'absence de jeux transversaux à l'axe longitudinal en plus de l'absence de jeu selon l'axe longitudinal entre l'anse et la poignée lors des manipulations de l'article culinaire permet d'améliorer l'ergonomie et la qualité perçue par l'utilisateur.

De préférence, la première partie de la première surface d'appui est décallée par rapport à l'axe longtudinal et la première surface d'appui comporte une deuxième partie, symétrique de la première partie par rapport à l'axe longitudinal.

Cette disposition permet d'obtenir un maintien équilibré de la poignée sur l'anse de part et d'autre de l'axe longitudinal.

Avantageusement, les première et deuxième parties sont formées chacune par une paroi s'étendant selon une direction verticale, perpendiculaire au plan horizontal défini par l'anse.

Cette disposition permet de bloquer efficacement la poignée sur l'anse, les parois étant perpendiculaires à la direction des jeux à supprimer.

De préférence, les premières et deuxièmes parties sont formées par deux parois planes.

Cette disposition permet d'obtenir une première surface d'appui simple et économique à réaliser.

Avantageusement, l'angle formé par le plan passant par une des parois planes et le plan passant par l'axe longitudinal, perpendiculaire au plan horizontal est inférieur ou égal à 45°.

Cette disposition permet d'obtenir un emboitement avec un effet de coincement des parois planes dans la paroi interne de l'ouverture et ainsi d'obtenir une bonne immobilisation suivant une direction transversale à l'axe longitudinal de la poignée sur l'anse.

De préférence, les deux parties sont formées par deux parois en arc de cercle.

Avantageusement, la première surface d'appui a une forme générale concave.

De préférence, la deuxième surface d'appui du bec est formée par une face supérieure d'extrémité inclinée par rapport à l'axe longitudinal et symétrique par rapport à l'axe longitudinal, ladite face supérieure d'extrémité coopérant avec une face inférieure de l'anse de forme complémentaire à la forme de la face supérieure d'extrémité.

Cette disposition permet de générer de manière simple un effort sur le bec suivant l'axe longitudinal proportionnel au couple exercé par le poids de l'article culinaire.

De plus, une face supérieure d'extrémité inclinée par rapport à l'axe longitudinal permet de faciliter l'introduction du bec dans l'ouverture lors de l'assemblage de la poignée sur l'anse.

Avantageusement, la face supérieure d'extrémité est formée par une génératrice coupant l'axe longitudinal en un même point.

Ainsi, le bec de la poignée a une forme générale pointue. Cette disposition permet donc une introduction encore plus facile du bec dans l'ouverture. Cette disposition permet également un positionnement transversal à l'axe longitudinal du bec de la poignée dans la face inférieure de l'anse.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue d'ensemble en perspective d'une poignée amovible selon un mode particulier de réalisation de l'invention agencé sur une anse d'un article culinaire,
- la figure 2 est une vue en perspective de la poignée amovible et de l'anse de la figure 1,
- la figure 3 est une vue de dessus de la poignée amovible de la figure 1 accouplée et bloquée sur l'anse de l'article culinaire,
- la figure 4 est une vue partielle du dessous de la poignée de la figure 3,
- la figure 5 est une vue partielle du dessous de la poignée de la figure 3 selon un autre mode de réalisation,
- la figure 6 est une vue en coupe de la poignée amovible suivant le plan de coupe VI de la figure 3,
- la figure 7 est une vue en coupe suivant le plan de coupe VI de la figure 3 de la poignée amovible agencée sur l'anse, le verrou étant en position de désaccouplement et l'organe de pincement étant en position de libération,
- la figure 8 est une vue en coupe suivant le plan de coupe VI de la figure 3 de la poignée amovible agencée sur l'anse, le verrou étant en position d'accouplement et l'organe de pincement étant en position de blocage,
- la figure 9 est un agrandissement d'un détail IX de la figure 7.
- la figure 10 est un agrandissement d'un détail X de la figure 8.

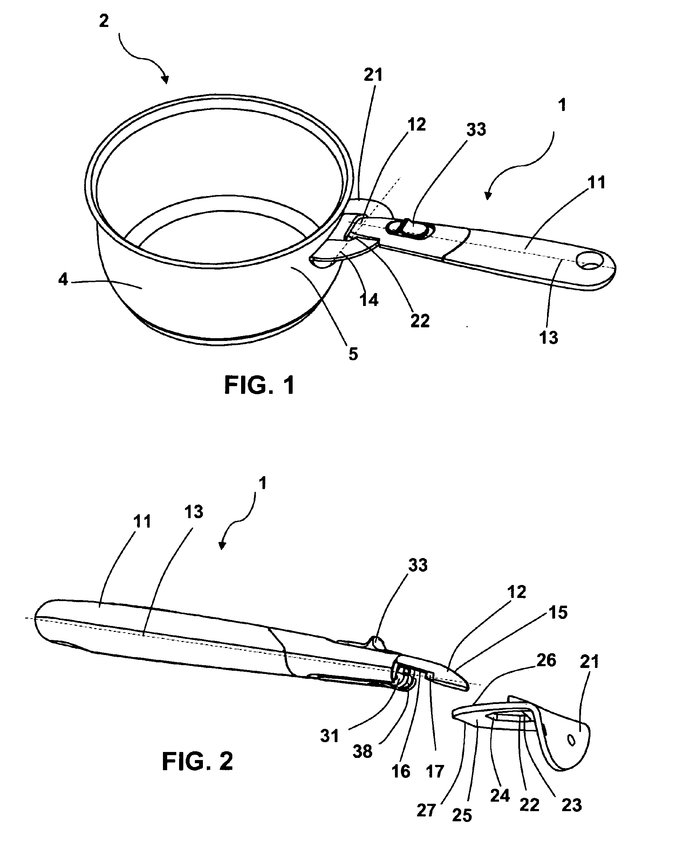

Les figures 1 et 2 illustrent un article culinaire 2 comportant une calotte 4 munie d'une paroi latérale 5 sur laquelle est rapportée une anse 21. L'anse 21 est fixée sur la paroi latérale 5 notamment par deux rivets. L'anse 21 s'étend radialement par rapport à la paroi latérale 5 dans un plan sensiblement horizontal, parallèle au plan de pose de la calotte 4 et comporte une ouverture 22 qui s'étend principalement dans une direction tangentielle à la paroi latérale 5.

L'article culinaire 2 comporte une poignée 1 amovible s'étendant selon un axe longitudinal 13 et comprenant à une extrémité un bec 12 destiné à coopérer avec l'ouverture 22 pour assembler ou désassembler la poignée 1 de l'anse 21. La poignée 1 comporte un corps de préhension 11 qui permet une fois la poignée 1 assemblée sur l'anse 21 de manipuler l'article culinaire 2.

Le bec 12 est introduit dans l'ouverture 22 par le dessus pour s'assembler sur l'anse 21 par basculement autour d'un axe de pivotement 14, transversal à l'axe longitudinal 13 et compris dans le plan horizontal. Le bec 12 comporte une face supérieure d'extrémité 15 inclinée qui coopère avec une face inférieure 23 de l'anse 21 pour former un premier appui antérieur à l'axe de pivotement 14. Le bec 12 comporte une paroi d'appui inférieure 16 qui coopère avec une face supérieure 26 de l'anse pour former un deuxième appui postérieur à l'axe de pivotement 14. Ainsi lors de la manipulation par l'utilisateur, le poids de l'article culinaire 2 crée un couple autour de l'axe de pivotement 14 qui génère un premier effort sur le premier appui et un deuxième effort sur le deuxième appui de direction opposée.

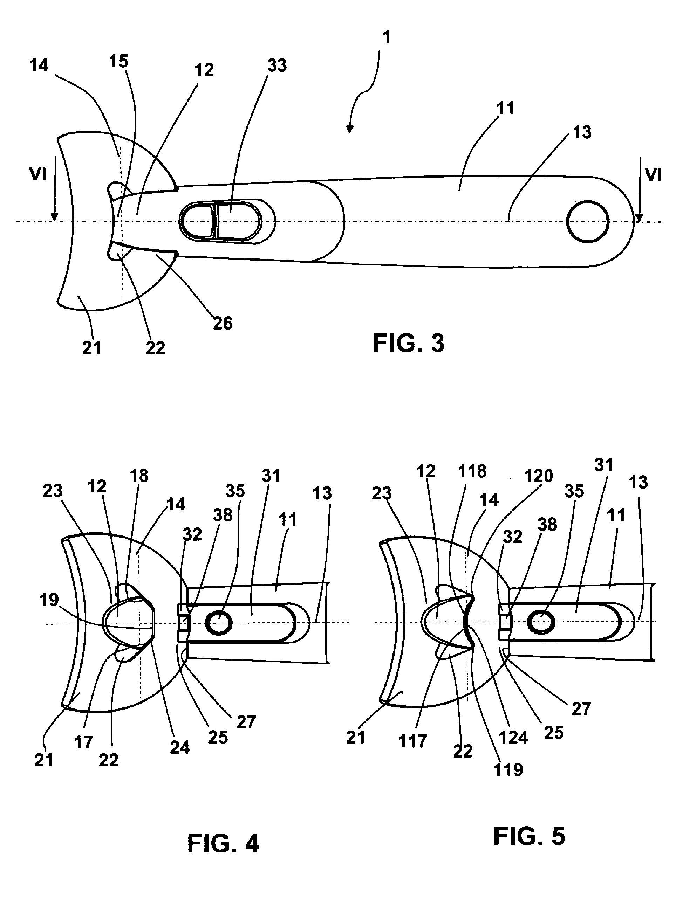

Conformément aux figures 4 et 5, le bec 12 comporte une première surface d'appui 17, 18, 117, 118, perpendiculaire à la paroi d'appui inférieure 16 et coopérant avec une paroi interne 24, 124 de l'ouverture 22 pour immobiliser la poignée 1 sur l'anse 21 selon l'axe longitudinal 13 et avantageusement également dans une direction transversale à l'axe longitudinal, incluse dans le plan horizontal lorsque la poignée 1 est assemblée sur l'anse 21.

Selon un premier mode de réalisation illustré à la figure 4, la première surface d'appui comporte deux parois planes inclinées 17, 18 et symétriques par rapport à l'axe longitudinal 13. L'angle formé par le plan passant par une des parois planes inclinées 17, 18 et l'axe longitudinal est égal à 45°. Une paroi plane perpendiculaire 19 à l'axe longitudinal relie les deux parois planes inclinées 17, 18. La paroi interne 24 de l'ouverture 22 a une forme complémentaire à la forme de la première surface d'appui 17, 18.

Selon un deuxième mode de réalisation illustré à la figure 5, la première surface d'appui comporte deux parois en arc de cercle 117, 118, symétriques par rapport à l'axe longitudinal et qui se prolongent respectivement par un rayon 119, 120 de courbure inverse à la courbure des parois en arc de cercle 117, 118. La première surface d'appui a une forme générale concave. La paroi interne 124 de l'ouverture 22 a une forme complémentaire à la forme de la première surface d'appui 117, 118.

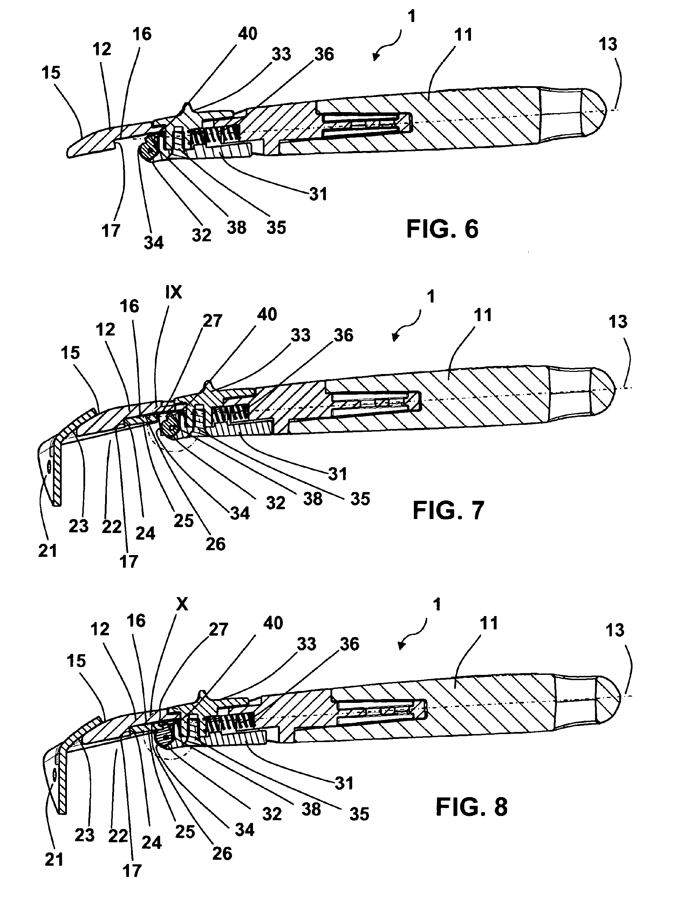

Tel que visible aux figures 7 et 8, le bec 12 comporte une deuxième surface d'appui formée par la face supérieure d'extrémité 15 inclinée qui coopère avec l'anse 21 pour générer sur le bec 12 un effort suivant l'axe longitudinal 13 proportionnel au couple exercé par le poids de l'article culinaire. L'effort généré permet de plaquer la première surface d'appui 17, 18 contre la paroi interne 24 de l'ouverture. La face supérieure d'extrémité 15 inclinée du bec 12 a sensiblement la forme de l'enveloppe extérieure d'un demi-cône à base oblongue engendré par une ligne sensiblement droite qui coupe l'axe longitudinal 13 en un même point (Fig. 1 et 2). La partie pointue d'extrémité est tronquée et arrondie.

Tel qu'illustré aux figures 6 à 10, la poignée 1 comporte un dispositif de verrouillage comprenant un verrou 31 mobile en translation suivant l'axe longitudinal 13. Le verrou 31 est mobile entre une première position dite d'accouplement dans laquelle la poignée 1 est assemblée sur l'anse 21 et une deuxième position dite de désaccouplement dans laquelle la poignée 1 peut être désassemblée de l'anse 21. Le verrou 31 comporte une extrémité avant 32 qui est glissée sous une face inférieure externe 25 de l'anse 21 dans la position d'accouplement. Un bouton de manoeuvre 33 est agencé sur le corps de préhension 11 et est fixé sur le verrou 31 par l'intermédiaire d'une vis 35 pour permettre la commande du verrou 31.

Un ressort 36 de rappel est agencé dans le corps de préhension 11 pour rappeler le verrou 31 en position d'accouplement. L'extrémité avant 32 du verrou 31 comporte une face arrondie 34 qui coopère avec un bord externe 27 de l'anse 21 lors de l'assemblage de la poignée 1 par basculement sur l'anse 21. Ainsi, le recul du verrou 31 lors de l'assemblage de la poignée 1 sur l'anse 21 est automatique.

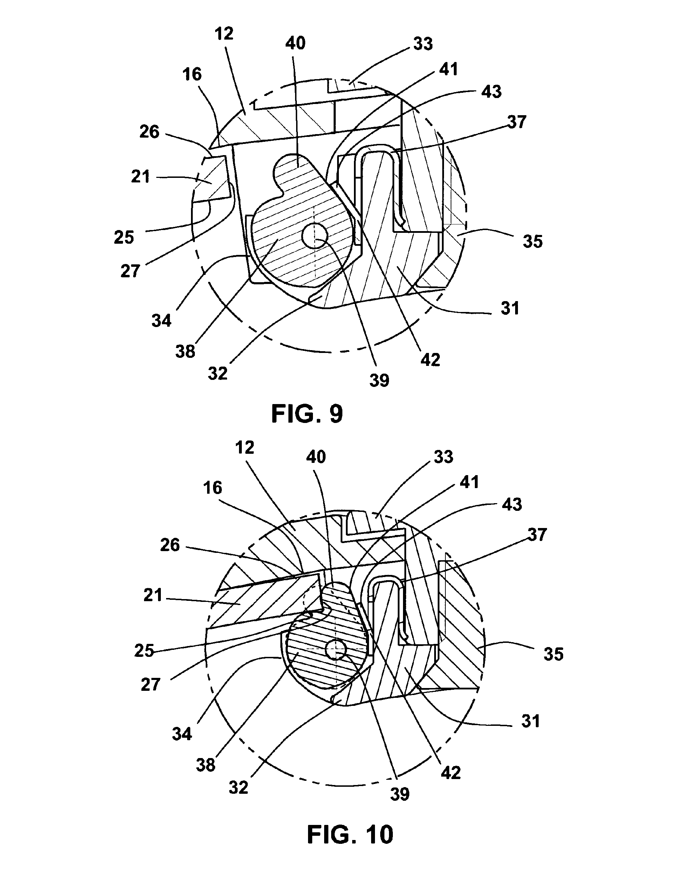

L'extrémité avant 32 du verrou 31 comporte une came 38 mobile en rotation par rapport au verrou 31 autour d'un axe 39 perpendiculaire à l'axe longitudinal 13. La came 38 est mobile entre une position de libération de l'anse 21 (Fig.7 et 9) et une position de blocage de l'anse 21 dans laquelle la came 38 mobile exerce un effort sur l'anse 21 pour la plaquer contre la paroi d'appui inférieure 16 du bec 12 selon un axe perpendiculaire à l'axe longitudinal 13, le verrou 31 étant dans la position d'accouplement (Fig.8 et 10).

La came 38 mobile comporte une excroissance 40 destinée à coopérer avec le bord externe 27 de l'anse 21 pour mettre la came 38 en rotation lors du déplacement du verrou 31 de la position de désaccouplement à la position d'accouplement. La came 38 passe ainsi de la position de libération à la position de blocage. Sur la figure 10, la came 38 est ajoutée en surimpression en trait pointillé dans sa position de libération de la figure 9 pour illustrer les deux positions. Dans la position de blocage, l'effort exercé par la came 38 sur l'anse 21 est proportionnel à l'effort de rappel du ressort 36 sur le verrou 31.

Une lame ressort 37 (Fig.9, 10) assure le retour de la came 38 mobile en position de libération. La lame ressort 37 comporte une première extrémité 42 qui est fixée au verrou 31 et une deuxième extrémité 43 qui prend appui sur une paroi 41 de la came 38 mobile. L'appui de la deuxième extrémité 43 de la lame ressort 37 sur la paroi 41 de la came 38 mobile crée un couple de mise en rotation de la came 38 mobile.

En fonctionnement, l'utilisateur saisit le corps de préhension 11 de la poignée 1 et introduit le bec 12 dans l'ouverture 22 par le dessus. Ensuite, il fait basculer la poignée 1 autour d'un axe de pivotement 14, transversal à l'axe longitudinal 13 et compris dans le plan horizontal. Ainsi la face supérieure d'extrémité 15 du bec 12 vient en contact avec la face inférieure 23 de l'anse 21, la première surface d'appui 17, 18 du bec 12 vient en contact avec la paroi interne 24 de l'ouverture 22 puis la face arrondie 34 de l'extrémité avant 32 du verrou 31 prend appui sur le bord externe 27 de l'anse 21. En poursuivant le basculement de la poignée 1, le verrou 31 va reculer à l'encontre de la force de rappel du ressort 36. Lorsque la poignée 1 est quasiment en position assemblée sur l'anse 21 (Fig. 7), l'extrémité avant 32 du verrou 31 glisse sous la face inférieure externe 25 sous l'effet du ressort 36, l'excroissance 40 de la came 38 mobile prend alors appui sur le bord externe 27 et la came 38 pivote à l'encontre de la force de rappel de la lame ressort 37 puis plaque l'anse 21 contre la paroi d'appui inférieure 16 du bec 12 (Fig. 8, 10).

Lorsque l'utilisateur manipule l'article culinaire 2, le poids de l'article culinaire 2 génère, à l'aide de la face supérieure d'extrémité 15 inclinée qui coopère avec l'anse 21, un effort sur le bec 12 suivant l'axe longitudinal 13 qui plaque la première surface d'appui 17,18 contre la paroi interne 24 de l'ouverture 22.

Pour désassembler la poignée 1 de l'anse 21, l'utilisateur commande le bouton de manoeuvre 33 pour faire reculer le verrou 31 en position de désaccouplement, à l'encontre de la force de rappel du ressort 36. Lors du déplacement du verrou 31, la lame ressort 37 va faire pivoter la came 38 mobile de la position de blocage à la position de libération. L'utilisateur peut ensuite basculer la poignée 1 et extraire le bec 12 de l'ouverture 22 de l'anse 21, tout en relâchant le bouton de manoeuvre 33.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi le verrou 31 peut être mobile en rotation suivant un axe perpendiculaire à l'axe longitudinal 13.

Dans une variante de réalisation, la came 38 mobile peut être mise en rotation par un levier actionné par l'utilisateur.

## Revendications

1. Article culinaire (2) comprenant au moins une anse (21) s'étendant vers l'extérieur dans un plan sensiblement horizontal et dans laquelle est ménagée une ouverture (22), ledit article culinaire (2) comportant une poignée (1) amovible s'étendant selon un axe longitudinal (13) et comportant à une extrémité un bec (12) susceptible d'être introduit dans ladite ouverture (22) pour assembler la poignée (1) sur l'anse (21) par pivotement, **caractérisé en ce que** le bec (12) comporte une première surface d'appui (17, 18, 117, 118) coopérant avec une paroi interne (24, 124) de l'ouverture (22) pour immobiliser la poignée (1) sur l'anse (21) selon l'axe longitudinal (13) lorsque la poignée (1) est assemblée sur l'anse (21) et **en ce que** le bec (12) comporte une deuxième surface d'appui (15) qui coopère avec l'anse (21) pour générer sur le bec (12) un effort suivant l'axe longitudinal (13) proportionnel au couple exercé par le poids de l'article culinaire (2), ledit effort permettant de plaquer la première surface d'appui (17, 18, 117, 118) contre la paroi interne (24, 124) de l'ouverture (22).

2. Article culinaire (2) selon la revendication 1 **caractérisé en ce que** la première surface d'appui comporte une première partie (17, 117) non parallèle et non perpendiculaire à l'axe longitudinal (13), ladite première partie (17, 117) coopérant avec la paroi interne (24, 124) de l'ouverture (22), de forme complémentaire à la forme de la première partie (17,117), pour immobiliser la poignée (1) sur l'anse (21) dans une direction transversale à l'axe longitudinal (13), incluse dans le plan horizontal lorsque la poignée (1) est assemblée sur l'anse (21).

3. Article culinaire (2) selon la revendication 2 **caractérisé en ce que** la première partie (17, 117) de la première surface d'appui est décalée par rapport à l'axe longitudinal (13) et **en ce que** la première surface d'appui comporte une deuxième partie (18, 118), symétrique de la première partie (17, 117) par rapport à l'axe longitudinal (13).

4. Article culinaire (2) selon la revendication 3, **caractérisé en ce que** les premières et deuxièmes parties sont formées chacune par une paroi (17, 117, 18, 118) s'étendant selon une direction verticale, perpendiculaire au plan horizontal défini par l'anse (21).

5. Article culinaire (2) selon l'une quelconque des revendications 3 à 4 **caractérisé en ce que** les premières et deuxièmes parties sont formées par deux parois planes (17, 18).

6. Article culinaire (2) selon la revendication 5 **caractérisé en ce que** l'angle formé par le plan passant par une des parois planes (17, 18) et le plan passant par l'axe longitudinal (13), perpendiculaire au plan horizontal, est inférieur ou égal à 45°.

7. Article culinaire (2) selon l'une quelconque des revendications 3 à 4 **caractérisé en ce que** les premières et deuxièmes parties sont formées par deux parois (117, 118) en arc de cercle.

8. Article culinaire (2) selon l'une quelconque des revendications 1 à 7, **caractérisé en ce que** la première surface d'appui (17, 117, 18, 118) a une forme générale concave.

9. Article culinaire (2) selon l'une quelconque des revendications 1 à 8, **caractérisé en ce que** la deuxième surface d'appui du bec est formée par une face supérieure d'extrémité (15) inclinée par rapport à l'axe longitudinal (13) et symétrique par rapport l'axe longitudinal (13), ladite face supérieure d'extrémité (15) coopérant avec une face inférieure (23) de l'anse (21) de forme complémentaire à la forme de la face supérieure d'extrémité (15).

10. Article culinaire selon la revendication 9, **caractérisé en ce que** la face supérieure d'extrémité (15) est formée par une génératrice coupant l'axe longitudinal (13) en un même point.

## Patentansprüche

1. Kochgeschirr (2) mit mindestens einem Henkel (21), der sich auf einer im Wesentlichen horizontalen Ebene nach außen erstreckt und in den eine Öffnung (22) eingelassen ist, wobei das Kochgeschirr (2) einen abnehmbaren Griff (1), der entlang einer Längsachse (13) verläuft, sowie an einem Ende ein Einsatzstück (12) umfasst, das in die genannte Öffnung (22) eingeführt werden kann, um den Griff (1) mit einer Drehbewegung am Henkel (21) zu befestigen, **dadurch gekennzeichnet, dass** das Einsatzstück (12) eine erste Auflagefläche (17, 18, 117, 118) aufweist, die mit einer Innenwand (24, 124) der Öffnung (22) zusammenwirkt, um den Griff (1) entlang der Längsachse (13) an dem Henkel (21) zu arretieren, wenn der Griff (1) am Henkel (21) montiert ist, und **dadurch gekennzeichnet, dass** das Einsatzstück (12) eine zweite Auflagefläche (15) umfasst, die mit dem Henkel (21) zusammenwirkt, um an dem Einsatzstück (12) entlang der Längsachse (13) eine Kraft zu erzeugen, die sich proportional zu dem Moment verhält, das vom Gewicht des Kochgeschirrs (2) ausgeübt wird, wobei diese Kraft bewirkt, dass die erste Auflagefläche (17, 18, 117, 118) gegen die Innenwand (24, 124) der Öffnung (22) gepresst wird.

2. Kochgeschirr (2) nach Anspruch 1, **dadurch gekennzeichnet, dass** die erste Auflagefläche einen ersten Abschnitt (17, 117) umfasst, der nicht parallel oder senkrecht zur Längsachse (13) verläuft, wobei dieser erste Abschnitt (17, 117) mit der Innenwand (24, 124) der Öffnung (22) formkomplementär zur Form des ersten Abschnitts (17, 117) zusammenwirkt, um den Griff (1) an dem Henkel (21) in einer quer zur Längsachse (13) verlaufenden Richtung auf horizontaler Ebene zu arretieren, wenn der Griff (1) am Henkel (21) montiert ist.

3. Kochgeschirr (2) nach Anspruch 2, **dadurch gekennzeichnet, dass** der erste Abschnitt (17, 117) der ersten Auflagefläche in Bezug auf die Längsachse (13) versetzt ist und dass die erste Auflagefläche einen zweiten Abschnitt (18, 188) umfasst, der in Bezug auf die Längsachse (13) zum ersten Abschnitt (17, 117) symmetrisch ist.

4. Kochgeschirr (2) nach Anspruch 3, **dadurch gekennzeichnet, dass** der erste und der zweite Abschnitt jeweils durch eine Wand (17, 117, 18, 118) gebildet werden, die in senkrechter Richtung rechtwinklig zu der von dem Henkel (21) definierten horizontalen Ebene verläuft.

5. Kochgeschirr (2) nach einem der Ansprüche 3 bis 4, **dadurch gekennzeichnet, dass** der erste und der zweite Abschnitt durch zwei ebene Wände (17, 18) gebildet werden.

6. Kochgeschirr (2) nach Anspruch 5, **dadurch gekennzeichnet, dass** der Winkel, der von der durch eine der ebenen Wände (17, 18) verlaufenden Ebene und von der durch die rechtwinklig zur horizontalen Ebene liegende Längsachse (13) verlaufenden Ebene gebildet wird, höchstens 45° beträgt.

7. Kochgeschirr (2) nach einem der Ansprüche 3 bis 4, **dadurch gekennzeichnet, dass** der erste und der zweite Abschnitt durch zwei bogenförmige Wände (117, 118) gebildet werden.

8. Kochgeschirr (2) nach einem der Ansprüche 1 bis 7, **dadurch gekennzeichnet, dass** die erste Auflagefläche (17, 117, 18, 118) eine im Wesentlichen konkave Form aufweist.

9. Kochgeschirr (2) nach einem der Ansprüche 1 bis 8, **dadurch gekennzeichnet, dass** die zweite Auflagefläche des Einsatzstücks durch eine obere Endfläche (15) gebildet wird, die in Bezug auf die Längsachse (13) geneigt und in Bezug auf die Längsachse (13) symmetrisch ist, wobei diese obere Endfläche (15) mit einer Innenseite (23) des Henkels (21) formkomplementär zur Form der oberen Endfläche (15) zusammenwirkt.

10. Kochgeschirr nach Anspruch 9, **dadurch gekennzeichnet, dass** die obere Endfläche (15) von einem Generator gebildet wird, der die Längsachse (13) an einem bestimmten Punkt schneidet.

## Claims

1. Kitchen appliance (2) comprising at least one handle bracket (21) which extends slightly outwards on the horizontal plane and in which an opening is located (22), the aforementioned kitchen appliance (2) includes a movable handle (1) which extends along the longitudinal axis (13) and includes a spout at one end (12) which can be inserted into the aforementioned opening (22) to assemble the handle on to the (1) handle bracket (21) by a pivoting motion, **characterised in that** the spout (12) has a first bearing surface (17, 18, 117, 118) which co-operates with an internal wall (24, 124) of the opening (22) to secure the handle (1) on the handle bracket (21) along the longitudinal axis (13) when the handle (1) is assembled on to the handle bracket (21) and that the spout (12) has a second bearing surface (15) which co-operates with the bracket handle (21) to generate, on the spout (12), a push along the longitudinal axis (13) proportional to the torque exercised by the weight of the kitchen appliance (2), whereby the aforementioned effort enables the first bearing surface (17, 18, 117, 118) to be held against the internal wall (24, 124) of the opening (22).

2. Kitchen appliance (2) according to claim 1, **characterised in that** the first bearing surface (17, 117) which is non-parallel and non-perpendicular to the longitudinal axis (13), the aforementioned first part (17, 117) co-operates with the internal wall (24, 124) of the opening (22), which is of a complementary form to the form of the first part (17,117), to secure the handle (1) onto the handle bracket (21) in a direction transversal to the longitudinal axis (13), included on the horizontal plane when the handle (1) is assembled on to the handle bracket (21).

3. Kitchen appliance (2) according to claim 2, **characterised in that** the first bearing surface (17, 117) is shifted in relation to the longitudinal axis (13) and that the first bearing support includes a second part (18, 118), which is symmetrical to the first part (17, 117) in relation to the longitudinal axis (13).

4. Kitchen appliance (2) according to claim 3, **characterised in that** the first and second parts are each formed by a wall (17, 117, 18, 118) which extends in the vertical direction, perpendicular to the horizontal direction defined by the bracket handle (21).

5. Kitchen appliance (2) according to any of the claims 3 to 4, **characterised in that** the first and second parts are formed by two flat walls (17,18).

6. Kitchen appliance (2) according to claim 5, **characterised in that** the angle formed by the plane through one of the two flat walls (17, 18) and the plane through the longitudinal axis (13), perpendicular to the horizontal plane, is less than or equal to 45°.

7. Kitchen appliance (2) according to any of the claims 3 to 4, **characterised in that** the first and second parts are formed by two walls (117, 118) in an arc.

8. Kitchen appliance (2) according to any of the claims 1 to 7, **characterised by** the first bearing surface (17, 117, 18, 118) having a generally concave shape.

9. Kitchen appliance (2) according to any of the claims 1 to 8, **characterised in that** the second bearing surface of the spout is formed by a top end face (15) which is tilted in relation to the longitudinal axis (13) and symmetrical in relation to the longitudinal axis (13), the aforementioned top end face (15) co-operates with a bottom face (23) of the bracket handle (21) which is of a complementary form to the form of the top end face (15).

10. Kitchen appliance (2) according to the claim 9, **characterised in that** the top end face (15) is formed by a generator which intersects the longitudinal axis (13) at one same point.
